# EUROPEAN PATENT APPLICATION

(11) **EP 4 461 781 A1**
(43) Date of publication of application: **13.11.2024**
(21) Application number: 22918986.5
(22) Date of filing: 01.11.2022
(51) Int. Cl.: C09K 3/18

(54) **ECO-FRIENDLY LIQUID DEICING AGENT WITH SUPPRESSED CONCRETE BREAKAGE**

(30) Priority: 05.01.2022 KR 20220001753
(71) Applicant: Stars Tech Co., Ltd, Seoul 08389 (KR)
(72) Inventor: YANG, Seungchan, Seoul 07039 (KR)
(74) Representative: AWA Sweden AB
(86) International application number: PCT/KR2022/016925
(87) International publication number: WO 2023/132449

(57) **Abstract**

The present invention relates to an eco-friendly liquid deicing agent with suppressed concrete breakage, and according to the present invention, by providing an eco-friendly liquid deicing agent comprising a chloride-based material, a penetrating sealer and a dispersant, resistance to freezing and thawing may be improved by enhancing the compressive strength of concrete and blocking the permeation of moisture, thereby resulting in improved lifespan of concrete.

In addition, since it is sprayed in liquid form, it is easy to remove snow and has excellent initial ice-melting performance, and thus it may be effectively used for snow removal on bridges, ramps and highways that require fast initial ice-melting performance and where catastrophic damage is caused by asphalt road damage.

## Description

### [Technical Field]

The present invention relates to an eco-friendly liquid deicing agent with suppressed concrete breakage, and more specifically, to an eco-friendly liquid deicing agent for maintaining the compressive strength of concrete and suppressing moisture penetration through the addition of a penetrating sealer and a dispersant to a chloride-based liquid deicing agent, thereby improving the freeze-thaw resistance of concrete.

### [Background Art]

Recently, due to extreme weather conditions, heavy snowfall is occurring frequently not only in Korea but also around the world, resulting in an increase in the use of deicing agents. Although the types of deicing agents used vary slightly from country to country, Korea mainly uses general chloride-based deicing agents.

Chloride-based deicing agents contain calcium chloride (CaCl₂) and sodium chloride (NaCl) as main ingredients. Chloride-based deicing agents have ice-melting action through a rapid dissolution reaction and exothermic reaction due to deliquescent properties, and this ice-melting action is maintained by the freezing point depression caused by ions. Chloride-based deicing agents have the advantages of excellent ice-melting performance and low price, occupying about 90% of the deicing agent market.

However, chloride-based deicing agents commonly contain a large amount of chlorine ions (Cl⁻), and thus have the properties of corroding the iron under vehicles or the iron of bridges, yellowing plants, and deteriorating concrete. In particular, the deicing agent solution that have dissolved together with the snow penetrates into the pores of concrete and causes repeated freezing and thawing, thereby accelerating concrete breakage.

Concrete breakage is directly related to numerous public goods and causes great social damage. Road maintenance costs due to concrete breakage amount to approximately $2,000 per ton, which is 10 times the price of deicing agent. Thus, market demand for deicing agents to prevent concrete breakage and improve the lifespan of concrete is increasing.

Accordingly, the development and use of eco-friendly deicing agents that prevent breakage of iron and concrete and have less impact on plants are encouraged, but eco-friendly deicing agents generally have the disadvantages of being more expensive and having poor performance compared to existing chloride-based deicing agents. In particular, among eco-friendly deicing agents, non-chloride based deicing agents require acetate-based materials, making them very expensive, and have very low ice-melting performance, at half the level of chloride-based deicing agents.

Thus, research is needed on eco-friendly deicing agents that are cost-competitive, prevent concrete breakage, and at the same time have excellent ice-melting performance.

The most popularly used eco-friendly deicing agents are solid deicing agents in which corrosion inhibitors are mixed with solid chloride-based deicing agents. Solid eco-friendly deicing agents are effective in preventing corrosion of iron through corrosion inhibitors, but have the disadvantages that their usability decreases due to cementation when stored for a long period of time and that they only show normal ice-melting performance when sprayed in advance in areas that require immediate snow removal, such as ramps and bridges. In addition, they have the limitation that it is difficult to solve the problem of concrete deterioration due to the solution produced after snow removal penetrating into the pores of concrete.

For example, Korea Patent No. 10-2141869 describes a solid deicing agent composition that captures sodium chloride and calcium chloride in a carrier to ensure strong persistence. The above document provides a relatively eco-friendly deicing agent composition by increasing the persistence of the deicing agent and reducing the amount of deicing agent used, but has fatal disadvantages in that it is difficult to immediately respond to heavy snowfall compared to liquid deicing agents and it does not prevent corrosion of road facilities such as concrete or iron structures.

On the other hand, liquid eco-friendly deicing agents are in the form of chloride and corrosion inhibitors dissolved in water, and can be used immediately even in places where immediate snow removal is required due to their high specific heat. In addition, since they can be stored in a dedicated tank, there is no need for a separate snow removal warehouse, and they are almost unaffected by temperature and humidity, making management easy. Furthermore, they have the advantage of being easy to store for a long time as cementation does not occur, so the use of liquid deicing agents is increasing worldwide.

In this regard, Korea Patent Application No. 10-2004-0065667 describes a composition for a non-chloride based and less corrosive liquid type deicer. Although chloride-based materials are not used and acetate-based materials are used as ice-melting agents, acetate-based materials are more expensive than chloride-based materials and have very poor ice-melting performance, making it difficult to commercialize them.

Furthermore, eco-friendly liquid deicing agents with dissolved corrosion inhibitors also prevent corrosion of iron, but have the limitation that they do not solve the problem of snow and deicing agent solutions penetrating into the pores of concrete and deteriorating the concrete.

Accordingly, there is a need for the development of an eco-friendly liquid deicing agent that may effectively prevent deterioration of concrete while having low cost and excellent ice-melting performance.

### [Disclosure]

### [Technical Problem]

It is an object of the present invention to provide an eco-friendly liquid deicing agent with suppressed concrete breakage.

It is another object of the present invention to provide a method for producing the eco-friendly liquid deicing agent.

### [Technical Solution]

In order to achieve the above objects, the present invention provides an eco-friendly liquid deicing agent with suppressed concrete breakage, comprising a chloride-based material, a penetrating sealer, and a dispersant.

In the present invention, the chloride-based material may be one or more selected from calcium chloride (CaCl₂), sodium chloride (NaCl), potassium chloride (KCl), and magnesium chloride (MgCl₂).

In the present invention, the penetrating sealer may be one or more selected from silane, silicate, siliconate, and siloxane.

In the present invention, the dispersant may comprise a protective colloid and one or more of oil-in-water (O/W) and water-in-oil (W/O) surfactants.

In the present invention, a weight ratio of the protective colloid and the surfactant may be 1:1 to 1:10.

In the present invention, the protective colloid may be selected from the group consisting of polyvinyl alcohol, gum arabic, hydroxyethyl cellulose, and carboxymethyl cellulose.

In the present invention, an amount of the protective colloid may be 0.0001 to 5% by weight based on the total weight of the composition.

In the present invention, an amount of the surfactant may be 0.001 to 10% by weight based on the total weight of the composition.

In the present invention, a weight ratio of the oil-in-water and the water-in-oil surfactants may be 10:1 to 1:10.

In the present invention, the deicing agent may further comprise one or more corrosion inhibitors selected from gluconate, orthophosphate, polyphosphate, and silicate.

In the present invention, the deicing agent may further comprise one or more admixtures selected from methyl methacrylate, ethyl methacrylate, and polycarbonate.

In the present invention, a DLS diameter of the deicing agent may be 1,000 to 3,000 nm.

### [Advantageous Effects]

The eco-friendly liquid deicing agent with suppressed concrete breakage according to the present invention comprises a chloride-based material, a penetrating sealer and a dispersant, so that when the deicing agent is sprayed on a road, it may effectively prevent deterioration of concrete due to freezing and thawing by forming a coating film that may block moisture from penetrating into the concrete while maintaining the physical properties such as the compressive strength of the concrete itself. Thus, the eco-friendly liquid deicing agent of the present invention may be effectively used for snow removal on bridges, ramps, highways, and the like, where fast initial ice-melting performance is required and catastrophic damage is caused by asphalt road breakage.

### [Best Model]

Unless defined otherwise, all technical and scientific terms used in the present specification have the same meaning as commonly understood by those of ordinary skill in the technical field to which the present invention pertains. In general, the nomenclature used in the present specification is those well known and commonly used in the art.

The present invention relates to an eco-friendly liquid deicing agent with suppressed concrete breakage.

Deicing agents are divided into chloride-based and non-chloride based depending on their constituent materials, and are divided into solid and liquid based on their form.

Chloride-based deicing agents use chloride-based materials containing chlorine ions, such as calcium chloride and sodium chloride. Chloride-based deicing agents have deliquescent properties, thereby causing a rapid dissolution reaction, and use the heat generated through the dissolution reaction to melt snow. In addition, as the deicing agent melts the snow, freezing point depression phenomenon occurs due to ionized ions and the snow remains melted.

However, large amounts of chloride ions contained in chloride-based materials react with iron to form iron chloride, which corrodes iron structures such as cars, rebars and bridges. In addition, when chloride-based materials dissolve in water formed from melting snow and penetrate into the pores of concrete, freezing and exothermic reactions occur repeatedly inside the concrete, thereby causing the concrete to freeze and thaw. This deteriorates the concrete used in asphalt, road facilities, and the like, which increases maintenance costs and causes safety accidents. Furthermore, they have the disadvantage of interfering with the metabolism of roadside plants and causing numerous social and environmental problems, such as yellowing street trees.

When divided based on their form, liquid deicing agents are easier to store for a long period of time and have significantly fewer cementation issues compared to solid deicing agents. Furthermore, they are easier to use than solid deicing agents and are superior in terms of economic feasibility, such as reducing the number of workers and maintenance costs due to shortened preparation time.

However, liquid deicing agents have the fatal disadvantage that when sprayed on the road, they may penetrate into the pores of concrete together with melted snow or by themselves, and the penetrated moisture may deteriorate the concrete.

In order to solve this problem, the present invention provides an eco-friendly liquid deicing agent for preventing concrete breakage, comprising a chloride-based material, a penetrating sealer, and a dispersant. The eco-friendly liquid deicing agent of the present invention was intended to achieve the effect of improving the durability of concrete without deteriorating concrete even when the deicing agent is used on concrete, by combining penetrating sealers, admixtures, and the like, previously used in concrete with the deicing agent.

The liquid deicing agent of the present invention may be prepared by dissolving deicing agent components comprising a chloride-based material, a penetrating sealer, a dispersant and additional components in a solvent. The solvent is not particularly limited as long as it is a substance that may dissolve the deicing agent components to produce a liquid, but polar solvents such as water, acetone, chloroform and ethanol may be used and it is preferable to use deionized water, which has no odor and is the most stable as it does not cause side reactions.

The amount of the solvent may be 50 to 90% by weight, preferably 60 to 80% by weight, based on the total weight of the entire composition.

The deicing agent of the present invention uses a chloride-based material as a ice-melting agent. The chloride-based material may include any chloride-based material having deliquescent properties, preferably one or more of calcium chloride (CaCl₂), sodium chloride (NaCl), potassium chloride (KCl) and magnesium chloride (MgCl₂). Among these, calcium chloride, which has excellent deliquescent properties and causes the greatest freezing point depression phenomenon, is most preferable.

The chloride-based material may be included in an amount of 10 to 70% by weight, preferably 15 to 40% by weight, and more preferably 25 to 35% by weight, based on the total weight of the entire composition. If the chloride is contained in a small amount, its performance as an ice-melting agent is insufficient, and if it is contained in an excessive amount, the density increases and dispersion becomes difficult.

Ice-melting agents using such chloride-based materials contain a large amount of chlorine ions. There is a problem in that the contained chlorine ions react with iron to form iron chloride, which causes corrosion of iron structures, and thus, in the present invention, a corrosion inhibitor was added to the deicing agent composition to suppress corrosion.

The corrosion inhibitor may include gluconate, orthophosphate, polyphosphate, silicate, and the like. In the present invention, it is preferable to use gluconate, and it is most preferable to use sodium gluconate, which is non-toxic and easily biodegradable.

The corrosion inhibitor is preferably included in an amount of 0.1 to 5% by weight, and more preferably in an amount of 0.5 to 2% by weight, based on the total weight of the entire composition. If the corrosion inhibitor is contained in excessive amounts, insoluble matter may occur due to the formation of excessive complex salts, and if it is contained in too small amounts, it is difficult to prevent corrosion of iron due to chlorine ions.

In general, admixtures are additives used to improve the performance of concrete before or after hardening and to impart specific performance.

In the present invention, the admixture used in concrete is included in the deicing agent composition to improve the properties such as compressive strength of concrete when the deicing agent is used in concrete structures such as roads.

The admixture may include a polycarboxylic acid admixture using acrylic acid as a base to improve the compressive strength of concrete. For example, it may include methyl methacrylate, ethyl methacrylate, propyl methacrylate, polycarbonate, and the like, preferably methyl methacrylate.

The admixture may be included in an amount of 0.01 to 5% by weight, preferably 0.03 to 0.2% by weight, and more preferably 0.05 to 0.15% by weight, based on the total weight of the entire composition. If the admixture is included in an amount of less than 0.01% by weight, the effect of improving durability, such as resistance to freezing and thawing and the effect of inducing bonding between mixtures, may be weak, and if it is included in an amount of more than 5% by weight, the strength improvement rate decreases and the effect of improving durability becomes weak as the addition ratio of the admixture increases, which may reduce economic feasibility and affect snow removal performance.

In one embodiment of the present invention, it was confirmed that a liquid deicing agent containing an admixture may improve the compressive strength of concrete by up to 44.7%.

The eco-friendly liquid deicing agent of the present invention also comprises a penetrating sealer. When chloride-dissolved water produced by the use of deicing agent penetrates into the pores of concrete, freezing and thawing are repeated due to the heat of dissolution and freezing point depression generated by the deliquescent properties of the chloride-based material. Specifically, when the moisture penetrating into the concrete freezes, the surface layer of the concrete is destroyed due to the expansion pressure that occurs as the volume increases, and the ice-melting phenomenon is repeated again due to the deicing agent penetrating along with the moisture and the occurrence of cracks is promoted. In the present invention, a penetrating sealer is included in the deicing agent composition to form a film that prevents moisture from penetrating into the concrete when the deicing agent is used.

Specifically, when the deicing agent is sprayed on the road and penetrates into the pores of the concrete, the silicon component of the penetrating sealer reacts with the calcium component of the concrete to form a C-S-H (calcium-silicate-hydrate) bond. These C-S-H bonds form a coating film that blocks moisture penetrating into the concrete surface. Thus, moisture, which is the cause of concrete deterioration, is prevented from penetrating, thereby minimizing freeze-thaw breakage and extending the lifespan of concrete. In one embodiment of the present invention, it was confirmed that concrete treated with a deicing agent containing a penetrating sealer showed a water permeability of 71% or less compared to the untreated sample.

The penetrating sealer may include a silicone-based sealer that may chemically bond with concrete in a wet environment. For example, it is preferable to use one or more sealers selected from silane, silicate, siliconate and siloxane, and it is more preferable to use one of octyltriethoxysilane, octamethylcyclotetrasiloxane, polymethylhydrosilane or mixtures thereof.

It is preferable to mix two or more of the penetrating sealers to complement each other's properties, for example, silane and siloxane may be mixed. In this case, silane and siloxane may be mixed at a weight ratio of 1:1 to 10:1, preferably 2:1 to 6:1.

The total amount of the penetrating sealer may be 0.05% by weight or more, for example, 0.1 to 3% by weight, preferably 0.15 to 1% by weight, more preferably 0.2 to 0.5% by weight, based on the total weight of the entire composition.

The eco-friendly liquid deicing agent of the present invention was intended to induce smooth dispersion of the admixture and penetrating sealer and ensure ease of spraying through uniform mixing by incorporating a dispersant in order to solve the problem of poor dispersion in the process of applying admixtures and penetrating sealers previously used in the concrete field to deicing agents.

In the present invention, the dispersant may be used in an amount of 10 parts by weight or less, preferably 0.001 to 10 parts by weight, more preferably 0.005 to 5 parts by weight, and even more preferably 0.01 to 3 parts by weight, based on 100 parts by weight of the penetrating sealer.

If the amount of the dispersant relative to the penetrating sealer is higher than the above range, the moisture barrier performance of the penetrating sealer may be disturbed, and even if the moisture barrier performance is improved by controlling the components of the dispersant, the problem of lowering the compressive strength of concrete may occur. On the other hand, when the dispersant is used in a small amount within the above range, the effect of the penetrating sealer is properly demonstrated by the dispersant and does not interfere with the effect of other additives such as admixtures, and thus, the concrete exhibits excellent compressive strength after application of the liquid deicing agent and moisture may be effectively blocked.

In the present invention, the total amount of the dispersant may be 0.0002 to 10% by weight, preferably 0.001 to 1% by weight, and more preferably 0.002 to 0.02% by weight, based on the total weight of the entire composition.

The dispersant may include a material exhibiting protective colloidal and surfactant properties.

When a hydrophilic colloid is added to a hydrophobic colloid, the hydrophilic colloid surrounds the hydrophobic colloid and becomes stable, and thus, even when electrolyte is added thereto, it mixes well without coagulation, and in this case, the hydrophilic colloid is called a protective colloid.

The protective colloid may include polyvinyl alcohol, gum arabic, hydroxyethyl cellulose, carboxymethyl cellulose, and the like, and polyvinyl alcohol is preferred.

The protective colloid may be included in an amount of 0.0001 to 5% by weight, preferably 0.0004 to 0.3% by weight, and more preferably 0.0007 to 0.01% by weight, based on the total weight of the entire composition.

In the present invention, by using the protective colloid and the surfactant in combination, it may be adjusted to effectively improve moisture penetration while increasing the compressive strength of concrete to which the liquid deicing agent is applied.

The dispersant preferably includes the protective colloid and the surfactant in a weight ratio of 1:1 to 1:10, preferably 1:1.5 to 1:5.

In the present invention, the surfactant preferably include one or more of oil-in-water (O/W) and water-in-oil (W/O) surfactants.

Oil-in-water surfactants disperse oil in the form of particles in water, while water-in-oil surfactants do the opposite.

The oil-in-water surfactant may include glycerin, isopropyl alcohol, ethylene glycol, and the like, which exhibit oil-in-water emulsification properties that may disperse oil in water, and glycerin is most preferred. By using the oil-in-water surfactant, the freezing and thawing resistance of concrete may be improved.

The oil-in-water surfactant may be included in an amount of 0.0005 to 5% by weight, preferably 0.00075 to 0.5% by weight, and more preferably 0.001 to 0.005% by weight, based on the total weight of the entire composition.

The water-in-oil surfactant may include polyethylene glycol, propylene glycol, and the like, which exhibits water-in-oil emulsification properties that may disperse oil in water, and polyethylene glycol is preferred.

The water-in-oil surfactant may be included in an amount of 0.0005 to 5% by weight, preferably 0.00075 to 0.5% by weight, and more preferably 0.001 to 0.005% by weight, based on the total weight of the entire composition.

The surfactant may include both oil-in-water and water-in-oil surfactants. For example, oil-in-water and water-in-oil surfactants may include glycerin and polyethylene glycol.

The weight ratio of the oil-in-water and water-in-oil type surfactant may be 10:1 to 1:10, and preferably 2:1 to 1:2.

In the present invention, the total amount of the surfactant may be 0.001 to 10% by weight, preferably 0.0015 to 1% by weight, and more preferably 0.002 to 0.01% by weight, based on the total weight of the entire composition.

As the present invention includes and optimizes the dispersant as described above, both the compressive strength and moisture barrier performance of concrete may be improved, by overcoming the limitation that penetrating sealers or admixtures used in concrete are difficult to disperse when applied to liquid deicing agents, and even when dispersibility is ensured, the effects of penetrating sealers or admixtures are not well demonstrated in deicing agents.

In one embodiment of the present invention, the average zeta potential value of the liquid deicing agent using the dispersant of the present invention was -317.11 mV, which was a very stable value, confirming that the liquid deicing agent composition was well dispersed, and it was confirmed that the compressive strength of the concrete after application was excellent and the water permeability was low.

The liquid deicing agent of the present invention is characterized by a DLS diameter of 1,000 to 3,000 nm, especially 1,500 to 2,500 nm, as measured by dynamic light scattering (DLS).

The liquid deicing agent of the present invention may achieve a high compressive strength of concrete of 15 MPa or more, especially 17 MPa or more, preferably 18 MPa or more, and a low water permeability of 80% or less, especially 75% or less at the DLS diameter within the above range. If the DLS diameter is less than 1,000 nm, water permeability is further reduced and moisture may be easily blocked, but the surface waterproofing film is quickly formed and admixture penetration becomes difficult, and thus, the effect of improving the compressive strength of concrete is minimal, and the compressive strength decreases to 17 MPa or less. In addition, if the diameter is more than 3,000 nm, the compressive strength of concrete is good, but the activity of the penetrating sealer decreases and the water permeability increases to 80% or more, which may lower the moisture barrier performance and make it unsuitable for use.

In this way, in the present invention, it was confirmed that the DLS diameter of the liquid deicing agent affected the compressive strength and moisture barrier performance of concrete to which the liquid deicing agent was applied, and it was confirmed that compressive strength and moisture barrier performance may be achieved simultaneously within a certain range. In addition, the optimal DLS diameter that may suppress water permeability while maintaining good compressive strength of concrete was specified as 1,000 to 3,000 nm.

The eco-friendly liquid deicing agent according to the present invention may also comprise additional additives.

The additional additive is not particularly limited as long as it is a component that may prevent corrosion and act as an admixture. For example, it preferably include sodium nitrite

(NaNO₂), calcium nitrite (Ca(NO₂)₂), potassium nitrite (KNO₂), and the like, and sodium nitrite is especially preferred.

The additional additive may be included in an amount of 0.1 to 5% by weight based on the total weight of the entire composition.

The liquid deicing agent of the present invention may be prepared by dissolving chloride-based materials, corrosion inhibitors, additional additives, admixtures, penetrating sealers and dispersants in a solvent, and then stirring at 100 to 1,000 rpm, preferably 400 to 600 rpm.

The stirring may be performed for 1 to 48 hours, preferably 12 to 36 hours.

The eco-friendly liquid deicing agent with suppressed concrete breakage prepared in the present invention may improve the freezing and thawing resistance of concrete. It can be confirmed that the freezing and thawing of concrete in the deicing agent according to one embodiment of the present invention occurs very less, with an average of 1.21% compared to sodium chloride, and that the concrete combined with the deicing agent has excellent freezing and thawing resistance.

In addition, the eco-friendly liquid deicing agent with suppressed concrete breakage may prevent corrosion of steel materials. It can be confirmed that the corrosion rate of steel is very low, with an average of 6.63% compared to sodium chloride, even though highly corrosive chloride-based materials are mainly used and various materials such as admixtures and penetrating sealers are included.

The eco-friendly liquid deicing agent with suppressed concrete breakage prepared according to the present invention has the advantages in that, by including each component in the optimal composition ratio, it exhibits excellent ice-melting performance, improves service life by preventing corrosion and breakage of steel materials and concrete, improves physical properties, and has excellent workability when sprayed due to excellent fluidity and dispersibility.

### EXAMPLES

Hereinafter, the present invention will be described in more detail through examples. However, these Examples show some experimental methods and compositions only for illustrating the present invention, and the scope of the present invention is not limited to these Examples.

### Preparation Example: Preparation of eco-friendly liquid deicing agents with suppressed concrete breakage

An eco-friendly liquid deicing agent was prepared by mixing the solvent, chloride-based material, corrosion inhibitor, additional additive, admixture, sealer and dispersant according to the ratios shown in Table 1 below, and then stirring at 500 rpm for 24 hours.

Specifically, deionized water as a solvent, calcium chloride (CaCl₂·2H₂0) as a ice-melting agent, sodium gluconate as a corrosion inhibitor, sodium nitrite as an additional additive, methyl methacrylate as an admixture, and octyltriethoxysilane and polymethyl hydrosiloxane as a penetrating sealer were used, and the dispersant was selected from polyvinyl alcohol, polyethylene glycol, glycerin, isopropyl alcohol, ethylene glycol, and propylene glycol.

**[Table 1]**

| Classification | DI | CaCl₂ | SG | SN | MMA | OS | PMHS | PVA | PEG | Glycerin | IPA | EG | PG |
|---|---|---|---|---|---|---|---|---|---|---|---|---|---|
| Example 1 | to 100 | 28.7 | 1.8 | 2.1 | 0.1 | 0.24 | 0.06 | 0.00075 | 0.003 | 0 | 0 | 0 | 0 |
| Example 2 | to 100 | 28.7 | 1.8 | 2.1 | 0.1 | 0.24 | 0.06 | 0.00075 | 0.0015 | 0.0015 | 0 | 0 | 0 |
| Example 3 | to 100 | 28.7 | 1.8 | 2.1 | 0.1 | 0.24 | 0.06 | 0.00075 | 0 | 0.003 | 0 | 0 | 0 |
| Example 4 | to 100 | 28.7 | 1.8 | 2.1 | 0.1 | 0.24 | 0.06 | 0.001125 | 0.003 | 0 | 0 | 0 | 0 |
| Example 5 | to 100 | 28.7 | 1.8 | 2.1 | 0.1 | 0.24 | 0.06 | 0.001125 | 0.0015 | 0.0015 | 0 | 0 | 0 |
| Example 6 | to 100 | 28.7 | 1.8 | 2.1 | 0.1 | 0.24 | 0.06 | 0.001125 | 0 | 0.003 | 0 | 0 | 0 |
| Example 7 | to 100 | 28.7 | 1.8 | 2.1 | 0.1 | 0.24 | 0.06 | 0.0015 | 0.003 | 0 | 0 | 0 | 0 |
| Example 8 | to 100 | 28.7 | 1.8 | 2.1 | 0.1 | 0.24 | 0.06 | 0.0015 | 0.0015 | 0.0015 | 0 | 0 | 0 |
| Example 9 | to 100 | 28.7 | 1.8 | 2.1 | 0.1 | 0.24 | 0.06 | 0.0015 | 0 | 0.003 | 0 | 0 | 0 |
| Com. Ex. 1 | to 100 | 28.7 | 1.8 | 2.1 | 0.1 | 0.24 | 0.06 | 0.04182 | 0 | 0 | 0 | 0 | 0 |
| Com. Ex. 2 | to 100 | 28.7 | 1.8 | 2.1 | 0.1 | 0.24 | 0.06 | 0 | 0 | 0 | 1.5 | 0 | 0 |
| Com. Ex. 3 | to 100 | 28.7 | 1.8 | 2.1 | 0.1 | 0.24 | 0.06 | 0 | 1.5 | 0 | 0 | 0 | 0 |
| Com. Ex. 4 | to 100 | 28.7 | 1.8 | 2.1 | 0.1 | 0.24 | 0.06 | 0 | 0 | 0 | 0 | 1.5 | 0 |
| Com. Ex. 5 | to 100 | 28.7 | 1.8 | 2.1 | 0.1 | 0.24 | 0.06 | 0 | 0 | 0 | 0 | 0 | 1.5 |
| Com. Ex. 6 | to 100 | 28.7 | 1.8 | 2.1 | 0.1 | 0.24 | 0.06 | 0 | 0 | 1.5 | 0 | 0 | 0 |
| Com. Ex. 7 | to 100 | 28.7 | 1.8 | 2.1 | 0.1 | 0.24 | 0.06 | 0.1 | 0.5 | 0.5 | 0 | 0 | 0 |
| Com. Ex. 8 | to 100 | 28.7 | 1.8 | 2.1 | 0.1 | 0.24 | 0.06 | 0.5 | 0.5 | 0.5 | 0 | 0 | 0 |
| Com. Ex. 9 | to 100 | 28.7 | 1.8 | 2.1 | 0.1 | 0.24 | 0.06 | 1 | 1 | 1 | 0 | 0 | 0 |

DI: deionized water; SG: sodium gluconate; SN: sodium nitrite; MMA: methyl methacrylate; OS: octyltriethoxysilane; PMHS: poly(methylhydrosiloxane); PVA: polyvinylalcohol; PEG: polyethylene glycol; IPA: iso-propylalcohol; EG: ethylene glycol; PG: propylene glycol;

In the table above, the unit is % by weight.

### Experimental Example 1: Changes in physical properties according to DLS diameter and determination of optimal DLS diameter

An experiment was performed to measure the DLS diameter, zeta potential, water permeability and compressive strength of the deicing agent compositions prepared according to the Examples and Comparative Examples.

The DLS diameter and zeta potential of the deicing agent samples were measured three times repeatedly using a particle size distribution, zeta potential and molecular weight meter (ELSZ-2000ZS, Otsuka Electronics Korea Co., Ltd.), and the average values were obtained.

For the water permeability test, the activity of the penetrating sealer was measured by referring to the method described in KS F 4930:2012, and concrete test pieces were cured according to the test piece standards described in EM502-2 to produce test pieces with a compressive strength of 15 MPa at 7 days after curing.

After the water permeability test, the test pieces were completely dried for 24 hours under conditions of 23°C and 50% relative humidity, and then the compressive strength was measured according to the method described in KS F 2405:2010.

The measurement results are shown in Table 2 below.

**[Table 2]**

| Classification | Zeta potential (mV) | DLS diameter (nm) | Water permeability (%) relative to untreated sample | Compressive strength (MPa) |
|---|---|---|---|---|
| Example 1 | -511.72 | 2147.6 | 68 | 19.2 |
| Example 2 | -368.98 | 1790.8 | 63 | 18.7 |
| Example 3 | -374.45 | 1652 | 65 | 18.5 |
| Example 4 | -400.31 | 2187.5 | 71 | 20.3 |
| Example 5 | -279.75 | 1851.5 | 65 | 20 |
| Example 6 | -358.27 | 2053.6 | 69 | 19.4 |
| Example 7 | -66.18 | 1670.4 | 67 | 21.7 |
| Example 8 | -234.14 | 1752.3 | 71 | 18.7 |
| Example 9 | -260.15 | 2014.1 | 70 | 19.5 |
| Comparative Example 1 | -371.08 | 7014.7 | 87 | 19.1 |
| Comparative Example 2 | -284.51 | 8129.6 | 82 | 18.9 |
| Comparative Example 3 | -267.92 | 4771.9 | 80 | 20.1 |
| Comparative Example 4 | -44.83 | 20377.6 | 81 | 17.8 |
| Comparative Example 5 | -466.74 | 23522.3 | 90 | 18.7 |
| Comparative Example 6 | -274.53 | 4517.2 | 83 | 19.5 |
| Comparative Example 7 | -411.5 | 897.5 | 61 | 15.7 |
| Comparative Example 8 | -299.47 | 413.7 | 59 | 16.6 |
| Comparative Example 9 | -274.51 | 394.5 | 65 | 17 |

The average zeta potential value of Examples 1 to 9 was -317.11 mV, which was more stable than the average zeta potential value of -299.45 mV in Comparative Examples 1 to 9. In addition, all zeta potentials of the Examples and Comparative Examples showed very stable values lower than -40 mV, confirming that even if dispersion was well achieved, there were differences in other physical properties.

The deicing agents of Examples 1 to 9, which contain both a protective colloid (PVA) and a surfactant (PEG and/or glycerin) as a dispersant, showed a DLS diameter of 1,500 to 2,500 nm, and exhibited characteristics of water permeability of 71% or less and compressive strength of 18 MPa or more when the DLS diameter was in the above range.

On the other hand, in Comparative Examples 1, 3 and 6, which contain only one of protective colloid (PVA) and surfactant (PEG or glycerin) as a dispersant, the DLS diameter increased significantly to 4,000 nm or more, and in this case, it can be seen that even if the compressive strength may be improved, the water permeability increases excessively to 80% or more.

In addition, Comparative Examples 7 to 9, which contain both a protective colloid (PVA) and a surfactant (PEG and glycerin) but have an excessive total amount of 1.1% by weight or more based on the total weight of the composition, had too low DLS diameter values of less than 1,000 nm, and thus, the water permeability was low, but the waterproof coating film was formed excessively quickly in the concrete, making it difficult for the admixture to penetrate, and thus, the compressive strength was low at 17 MPa or less.

On the other hand, Comparative Examples 2, 4, and 5, which contain isopropyl alcohol, ethylene glycol and propylene glycol as a dispersant, showed very high DLS diameters of 8,000 to 24,000 nm, and in this case, water permeability compared to compressive strength was excessively high.

That is, the liquid deicing agent according to the present invention may provide a deicing agent that is well dispersed while containing a concrete admixture and a penetrating sealer and has a DLS diameter of 1,000 to 3,000 nm by including a specific dispersant in a specific ratio, and it can be seen that when a deicing agent within the above DLS diameter range is used, concrete exhibits excellent compressive strength of 18 MPa or more and low water permeability of 71% or less. This is a characteristic that cannot be obtained when the amount range of the dispersant is changed or other types of dispersants such as isopropyl alcohol, ethylene glycol and propylene glycol are used.

### Experimental Example 2: Measurement of the effect on freezing and thawing of concrete

An experiment was conducted to compare the effects of the deicing agents prepared according to the Examples on the freezing properties and thawing of concrete.

For the freezing and thawing measurement test of concrete, the effect of the deicing agents on the freezing and thawing of concrete was measured by referring to the method described in EM502-2:2014, and the test results are shown in Table 3 below.

**[Table 3]**

| Classification | Concrete freezing and thawing relative to sodium chloride (%) |
|---|---|
| Example 1 | -2.4 |
| Example 2 | -1.7 |
| Example 3 | -0.3 |
| Example 4 | 1.2 |
| Example 5 | -0.7 |
| Example 6 | 0.2 |
| Example 7 | -3.5 |
| Example 8 | -2.6 |
| Example 9 | -1.1 |

According to the experimental results, it could be confirmed that Examples 1 to 9 showed a very low relative loss rate due to freezing and thawing of concrete compared to sodium chloride, with an absolute value of less than 4%, and thus, had high freezing and thawing resistance. It can be determined that they have freezing and thawing resistance because the penetrating sealer penetrating into the pores of concrete chemically bonds with the concrete and has water-repellent properties.

### Experimental Example 3: Steel corrosion measurement

An experiment was conducted to measure the corrosiveness of the deicing agents prepared according to the Examples to steel materials.

For tests on the effect of deicing agents on steel corrosion, the corrosion rate of steel relative to sodium chloride was measured by referring to the method described in EM502-1:2014, and the test results are shown in Table 4 below.

**[Table 4]**

| Classification | Steel corrosion rate relative to sodium chloride (%) |
|---|---|
| Example 1 | 7.2 |
| Example 2 | 4.3 |
| Example 3 | 5.7 |
| Example 4 | 9.4 |
| Example 5 | 5.4 |
| Example 6 | 6.1 |
| Example 7 | 7.7 |
| Example 8 | 8.4 |
| Example 9 | 5.5 |

Examples 1 to 9 were measured to have less than 10% corrosiveness to iron compared to sodium chloride, which is used in general deicing agents. It was confirmed that the deicing agents prepared according to the above Examples exhibit excellent corrosion inhibition effects even though it uses mainly highly corrosive chloride-based materials and contains materials such as admixtures and penetrating sealers.

## Claims

1. An eco-friendly liquid deicing agent with suppressed concrete breakage, comprising a chloride-based material, a penetrating sealer, and a dispersant.

2. The eco-friendly liquid deicing agent with suppressed concrete breakage according to claim 1, wherein the chloride-based material is one or more selected from calcium chloride (CaCl₂), sodium chloride (NaCl), potassium chloride (KCl), and magnesium chloride (MgCl₂).

3. The eco-friendly liquid deicing agent with suppressed concrete breakage according to claim 1, wherein the penetrating sealer is one or more selected from silane, silicate, siliconate, and siloxane.

4. The eco-friendly liquid deicing agent with suppressed concrete breakage according to claim 1, wherein the dispersant comprises a protective colloid and one or more of oil-in-water (O/W) and water-in-oil (W/O) surfactants.

5. The eco-friendly liquid deicing agent with suppressed concrete breakage according to claim 4, wherein a weight ratio of the protective colloid and the surfactant is 1: 1 to 1:10.

6. The eco-friendly liquid deicing agent with suppressed concrete breakage according to claim 4, wherein the protective colloid is selected from the group consisting of polyvinyl alcohol, gum arabic, hydroxyethyl cellulose, and carboxymethyl cellulose.

7. The eco-friendly liquid deicing agent with suppressed concrete breakage according to claim 4, wherein an amount of the protective colloid is 0.0001 to 5% by weight, based on the total weight of the composition.

8. The eco-friendly liquid deicing agent with suppressed concrete breakage according to claim 4, wherein an amount of the surfactant is 0.001 to 10% by weight, based on the total weight of the composition.

9. The eco-friendly liquid deicing agent with suppressed concrete breakage according to claim 4, wherein a weight ratio of the oil-in-water surfactant and the water-in-oil surfactant is 10: 1 to 1:10.

10. The eco-friendly liquid deicing agent with suppressed concrete breakage according to claim 1, further comprising one or more corrosion inhibitors selected from gluconate, orthophosphate, polyphosphate, and silicate.

11. The eco-friendly liquid deicing agent with suppressed concrete breakage according to claim 1, further comprising one or more admixtures selected from methyl methacrylate, ethyl methacrylate, and polycarbonate.

12. The eco-friendly liquid deicing agent with suppressed concrete breakage according to claim 1, wherein a DLS diameter of the deicing agent is 1,000 to 3,000 nm.
